## Europäisches Patentamt
## European Patent Office
## Office européen des brevets

(19)

(11) Veröffentlichungsnummer : **0 184 647**
**B1**

(12) **EUROPÄISCHE PATENTSCHRIFT**

(45) Veröffentlichungstag der Patentschrift :
**11.01.89**

(51) Int. Cl.⁴ : **H 02 K 37/14**

(21) Anmeldenummer : **85113430.4**

(22) Anmeldetag : **23.10.85**

(54) **Einphasen-Schrittmotor.**

(30) Priorität : **06.12.84 CH 5809/84**

(43) Veröffentlichungstag der Anmeldung :
**18.06.86 Patentblatt 86/25**

(45) Bekanntmachung des Hinweises auf die Patenterteilung : **11.01.89 Patentblatt 89/02**

(84) Benannte Vertragsstaaten :
**AT BE DE FR GB IT NL SE**

(56) Entgegenhaltungen :
**CH--A-- 541 893**
**GB--A-- 2 052 882**

(73) Patentinhaber : **SAIA AG**
**Bahnhofstrasse 18**
**CH-3280 Murten (CH)**

(72) Erfinder : **Lechner, Hubert**
**Hertizentrum 5**
**CH-6300 Zug (CH)**

(74) Vertreter : **Steiner, Martin et al**
**c/o AMMANN PATENTANWAELTE AG BERN**
**Schwarztorstrasse 31**
**CH-3001 Bern (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Anwendungsgebiet und Zweck

Die Erfindung bezieht sich auf einen Einphasen-Schrittmotor gemäss dem Oberbegriff des Anspruchs 1.

Stand der Technik

Ein Einphasen-Schrittmotor der angegebenen Art ist in der CH-PS 541 893 beschrieben.

Aufgabe und Lösung

Der Erfindung liegt die Aufgabe zugrunde, unter Beibehaltung der ursprünglichen Vorteile des Schrittmotors den Verlauf des Antriebs-Drehmomentes in Funktion des Drehwinkels des in der CH-PS 541 893 beschriebenen Einphasen-Schrittmotors so zu verändern, dass der Minimalwert des Antriebs-Drehmomentes ansteigt und der erforderliche Erregerstrom abnimmt.

Die genannte Aufgabe wird erfindungsgemäss durch die im Kennzeichen des Anspruchs 1 angegebenen Merkmale gelöst.

Ein Ausführungsbeispiel der Erfindung ist in der Zeichnung dargestellt und wird im folgenden näher beschrieben.

Es zeigen: Fig. 1A bis 1F eine Prinzipdarstellung eines zweipoligen Einphasen-Schrittmotors in typischen Betriebslagen bzw. ein zugehöriges Impulsdiagramm der Erregerspannung,

Fig. 2 ein Diagramm der verschiedenen Drehmomente eines erfindungsgemässen Einphasen-Schrittmotors,

Fig. 3 ein erfindungsgemässer Einphasen-Schrittmotor in einer Schnittdarstellung,

Fig. 4 ein Prinzipdarstellung der Gruppenfolge eines erfindungsgemässen Einphasen-Schrittmotors und

Fig. 5 eine Prinzipdarstellung der Polarmfolge eines erfindungsgemässen Einphasen-Schrittmotors, dessen Rotor drei Polpaare besitzt.

Gleiche Bezugszahlen bezeichnen in allen Figuren der Zeichnung gleiche Teile.

Beschreibung

Vorerst wird an Hand der Figuren 1A bis 1F die prinzipielle Wirkungsweise eines in der CH-PS 541 893 beschriebenen zweipoligen Einphasen-Schrittmotors erläutert.

In den Figuren 1A bis 1E bedeuten 1 einen aus einem Permanent-Magnet bestehenden dauermagnetisierten zweipoligen Rotor, 2 und 3 zwei Hauptpole des Stators sowie 4 und 5 zwei Hilfspole des Stators. Ein magnetischer Rückschluss 6 verbindet die beiden Hauptpole 2 und 3 und ein magnetischer Rückschluss 7 die beiden Hilfspole 4 und 5. Der Rückschluss 6 trägt eine Erregerspule 8. Ein in der Erregerspule 8 fliessender Erregerstrom magnetisiert die beiden Hauptpole 2 und 3 entgegengesetzt, während die Hilfspole 4 und 5 nicht erregt sind. Die Hilfspole 4 und 5 sind gegenüber den Hauptpolen 2 und 3 bei einem Schrittmotor, dessen Rotor 1 zwei Pole besitzt, sowohl räumlich als auch elektrisch um einen Winkel $\alpha = 45°$ versetzt. Durch den Richtungssinn dieser Versetzung ist der Richtungssinn des Drehwinkels $\varphi$ des Schrittmotors festgelegt. Im weiteren wird angenommen, dass sich der Schrittmotor entgegengesetzt dem Drehrichtungssinn eines Uhrzeigers in positiver Richtung dreht.

Die Erregerspule 8 wird mittels bipolarer Gleichspannungsimpulse erregt, wobei die positiven und die negativen Amplituden als gleich gross angenommen werden. Der zeitliche Verlauf der Erregerspannung $U_E$ ist in der Fig. 1F dargestellt. Der Rotor 1 nimmt zeitlich nacheinander die in den Figuren 1A bis 1E dargestellten Positionen ein.

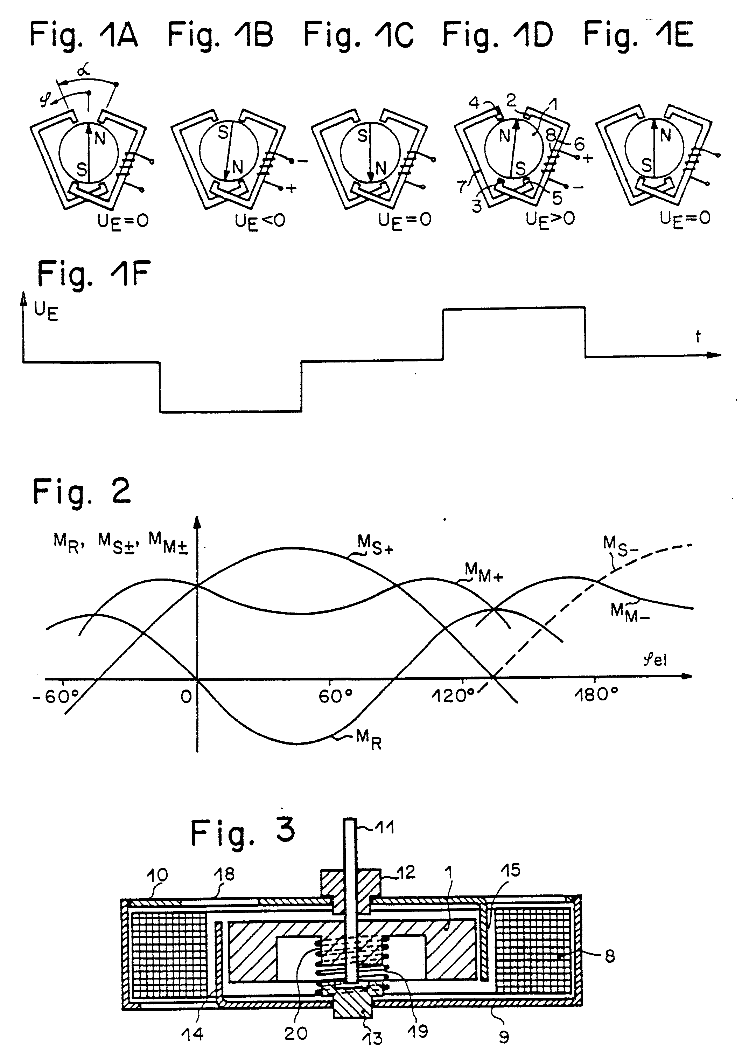

Zu Beginn, während der ersten Impulslücke, ist $U_E$ gleich Null und die Position des Rotors 1 dermassen, dass die Süd/Nord-Achse S-N seines Magneten in der Darstellung der Fig. 1A senkrecht nach oben weist. Beim Erscheinen des ersten Impulses, der z. B. negativ ist (siehe Fig. 1F), dreht der Rotor 1 in positiver Richtung um fast 180° weiter. Die Süd/Nord-Achse S-N des Rotormagneten besitzt jetzt in der Darstellung der Fig. 1B eine schräg von rechts oben nach links unten weisende Richtung. Nach Beendigung des ersten Impulses wird $U_E$ wieder gleich Null (siehe Fig. 1F, zweite Impulslücke). Der Rotor 1 dreht in positiver Richtung um einen kleinen Winkel weiter, damit die Süd/Nord-Achse S-N seines Magneten in der Darstellung der Fig. 1C wieder eine senkrechte, diesmal allerdings nach unten weisende Richtung annimmt. Beim Erscheinen des nächsten Impulses (siehe Fig. 1F), der positiv ist, dreht der Rotor 1 in positiver Richtung wieder um fast 180° weiter, so dass in der Darstellung der Fig. 1D die Süd/Nord-Achse S-N seines Magneten eine schräg von unten links nach oben rechts weisende Richtung erhält. Auch hier wird $U_E$ nach Beendigung des zweiten Impulses wieder Null (siehe Fig. 1F, dritte Impulslücke), so dass der Rotor 1 wieder in positiver Richtung um einen kleinen Winkel weiter dreht,

damit die Süd/Nord-Achse S-N seines Magneten eine diesmal wieder senkrecht nach oben weisende Richtung annimmt (Fig. 1E). Damit hat der Rotor 1 eine vollständige Umdrehung gemacht und eine neue Umdrehungsperiode des Schrittmotors kann beginnen. Die Kennlinien der Motormomente in Funktion des Drehwinkels $\varphi_{el}$ dieses Schrittmotors sind in der Fig. 2 des Standes der Technik dargestellt und weisen jede nur ein einziges ausgeprägtes Maximum auf, während ein zweites verkümmertes Maximum praktisch annähernd gleich gross wie ein vorhandenes Minimum ist. Im erfindungsgemässen Schrittmotor, dessen Kennlinien in der Fig. 2 dargestellt sind, wird durch die besondere Anordnung und Dimensionierung der Polarme des Stators der Wert des zweiten verkümmerten Maximums und damit auch der Wert des Minimums stark angehoben, so dass die in der Fig. 2 dargestellten Kennlinien der Motormomente $M_{M-}$ und $M_{M--}$ entstehen, die je zwei annähernd gleich grosse Maxima besitzen, die durch ein hochwertiges Minimum voneinander getrennt sind.

In der Fig. 2 sind die auf den Rotor 1 wirkenden Drehmomente in Funktion des Drehwinkels $\varphi_{el}$ dargestellt. Im stromlosen Zustand wird die Rotorlage durch ein Rastmoment $M_R$ bestimmt, das z. B. einer Sinusfunktion folgt und die Nullachse bei 0°, 90°, 180°, 270° und 360° el. schneidet. Bei positiver Erregung wirkt ein Motormoment $M_{M-}$, das sich aus dem Rastmoment $M_R$ und einem durch die Erregung der Statorpole hervorgerufenen Schaltmoment $M_{S-}$ zusammensetzt. Bei negativer Erregung wirkt ein Motormoment $M_{M--}$, das sich aus dem Rastmoment $M_R$ und einem durch die Erregung der Statorpole hervorgerufenen Schaltmoment $M_{S--}$ zusammensetzt, wobei das Schaltmoment $M_{S--}$ den gleichen Verlauf wie das Schaltmoment $M_{S-}$ aufweist, gegenüber diesem jedoch um 180° el. nacheilt. Das Maximum der Kennlinie des Schaltmomentes $M_{S-}$ bzw. des Schaltmomentes $M_{S--}$ liegt idealerweise bei einem Drehwinkel $\varphi_{el}$, bei dem das Rastmoment $M_R$ annähernd ein Minimum besitzt. Es gelten jeweils die Gleichungen :

$$M_{M-} = M_R + M_{S+} \quad \text{und} \quad M_{M--} = M_R +. M_{S-}$$

Die Grösse des Erregerstromes wird vorzugsweise derart gewählt, dass die Amplituden der Schaltmomente $M_{S-}$ und $M_{S--}$ doppelt so gross sind wie die Amplitude des Rastmomentes $M_R$. Es gilt dann :

$$M_{S+,\ max} = M_{S-,\ max} = 2 \cdot M_{R,\ max}.$$

In der Fig. 3 ist ein praktisches Ausführungsbeispiel eines derartigen erfindungsgemässen Schrittmotors dargestellt. Mit 1 ist wieder der dauermagnetisierte Rotor bezeichnet, der 2p Pole wechselnder Polarität aufweist und z. B. durch einen auf den Aussenumfang magnetisierten Magnetkörper oder einen Magnetkörper mit Polkäfigen gebildet sein kann. Ein Statorgehäuse 9 und ein Statordeckel 10 umgeben die ringförmige Erregerspule 8. Eine Welle 11 des Rotors 1 ist in einem Lager 12 des Statordeckels 10 einseitig radial gelagert. Das Lager 12 und ein in das Statorgehäuse 9 eingesetztes Lager 13 wirken als axialer Anschlag. Durch die nur einseitige radiale Lagerung des Rotors 1 werden an die Toleranzen der einzelnen Bauteile nur geringe Anforderungen gestellt. Das Statorgehäuse 9 und der Statordeckel 10 sind als Polkränze ausgebildet, aus denen Polarme ausgeklinkt und rechtwinklig nach innen umgebogen sind. In diesem Fall besitzen die Polarme des Stators alle einen rechteckförmigen Querschnitt. Zur besseren Uebersicht sind in der Fig. 3 nur die zwei Polarme 14 und 15 des Stators 9 ; 10 eingezeichnet, die in der Schnittebene liegen.

Der die Erregerspule 8 umgebende Stator 9 ; 10 besitzt somit Polarme, die in zweierlei sich abwechselnden Gruppen entlang dem Rotorumfang angeordnet sind, wobei sie sich je nach Polarität von der einen oder von der anderen Seite des Stators 9 ; 10 in axialer Richtung in den Raum zwischen der Erregerspule 8 und dem Rotor 1 erstrecken.

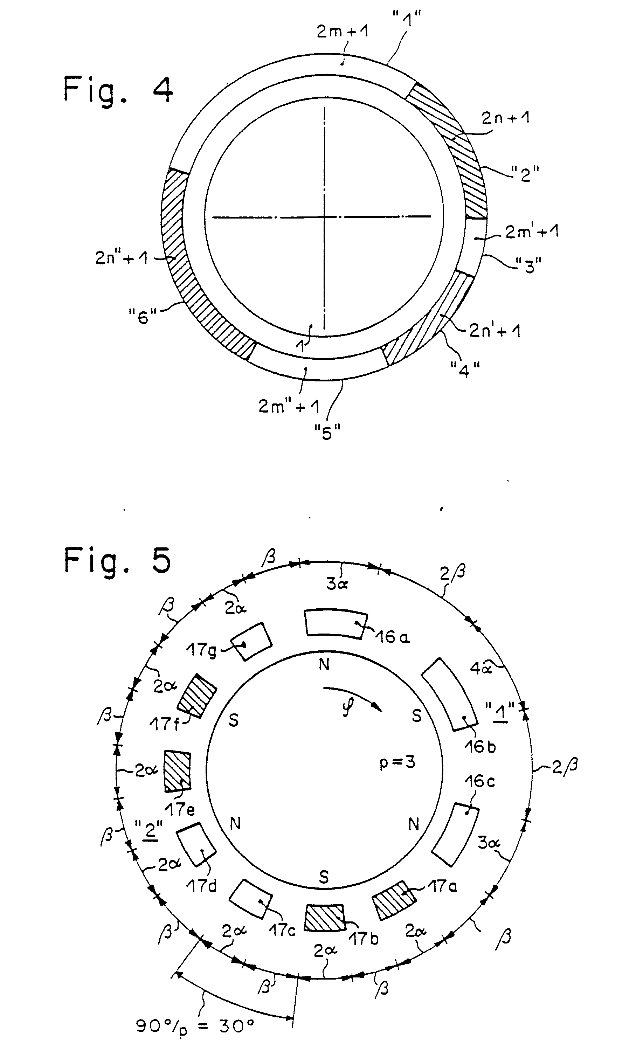

In der Fig. 4 gilt die Annahme, dass sechs Gruppen vorhanden sind, die im Uhrzeigersinn fortlaufend von « 1 » bis « 6 » durchnummeriert sind. Jede Gruppe der einen Art, z. B. jede ungeradzahlige Gruppe, also die Gruppen « 1 », « 3 » und « 5 » der Fig. 4 weist eine ungerade Anzahl 2m + 1, 2m' + 1, 2m'' + 1, ... ausschliesslich gleichnamiger Polarme Nord oder Süd auf, was in der Fig. 4 schematisch dadurch dargestellt ist, dass die zu diesen Gruppen gehörenden Flächen weiss wiedergegeben sind. Jede der anderen Gruppen, also die geradzahligen Gruppen « 2 », « 4 », und « 6 » der Fig. 4, weist eine ungerade Anzahl 2n + 1, 2n' + 1, 2n'' + 1, ... Polarme wechselnder Polarität auf, weshalb die zu diesen Gruppen gehörenden Flächen in der Fig. 4 schraffiert dargestellt sind. m, m', m'', ...., n, n', n'', ... sind jeweils ganzzahlige Werte, die grösser als Null sind.

In der Fig. 5 gilt einfachshalber die Annahme, dass nur zwei Gruppen « 1 » und « 2 » vorhanden sind, wobei die Gruppe « 1 » beispielsweise aus drei Polarmen 16a, 16b und 16c und die Gruppe « 2 » beispielsweise aus sieben Polarmen 17a, 17b, 17c, 17d, 17e, 17f und 17g besteht.

Der in der Fig. 5 dargestellte Einphasen-Schrittmotor dreht z. B. im Uhrzeigersinn und sein Drehwinkel ist mit $\varphi$ bezeichnet. Sein Rotor 1 besitzt 2p = 6 Pole wechselnder Polarität N und S, so dass p = 3 gilt. Der Querschnitt der Polarme des Stators 9 ; 10 sind in der Fig. 5 entweder weiss oder schraffiert dargestellt, was jeweils einer bestimmten Polarität entspricht. Alle Polarme 16a, 16b und 16c der Gruppe « 1 » haben in der Fig. 5 einen weiss dargestellten Querschnitt und somit, wie bereits erwähnt, eine gleichnamige Polarität.

Der Winkelabstand zwischen benachbarten Polarmen 16a, 16b und 16c der Gruppen « 1 », « 3 » und « 5 » mit gleichnamigen Polarmen, also in der Fig. 5 der Gruppe « 1 », ist jeweils gleich 2β. Jeder andere Winkelabstand zwischen benachbarten Polarmen des Stators ist gleich β. D. h. : Nicht nur innerhalb der anderen Gruppen « 2 », « 4 » und « 6 », also in der Fig. 5 innerhalb der Gruppe « 2 », ist der Winkelabstand zwischen deren Polarmen 17a, 17b, 17c, 17d, 17e, 17f und 17g gleich β, sondern auch zwischen benachbarten Randpolen, z. B. 16c und 17a, zweier benachbarten Gruppen.

Die Polarme der geradzahligen Gruppen, also der Gruppe « 2 » in der Fig. 5, sind paarweise mit wechselnder Polarität angeordnet, wobei dem letzten Polarm in Drehrichtung des Schrittmotors jeweils der gleichnamige Partner fehlt, da ja eine ungerade Anzahl Polarme pro Gruppe vorhanden ist. Die Polarme einer jeden geradzahligen Gruppe, in der Fig. 5 also die Polarme 17a, 17b, 17c, 17d, 17e, 17f und 17g der Gruppe « 2 », besitzen jeweils annähernd eine Winkelbreite 2α, wobei α eine konstante Winkelbreite darstellt. Die beiden äusseren Polarme der ungeradzahligen Gruppen « 1 », « 3 » und « 5 », also z. B. die Polarme 16a und 16c der Gruppe « 1 », besitzen annähernd eine Winkelbreite 3α und die anderen Polarme dieser Gruppen « 1 », « 3 » und « 5 », wie z. B. der Polarm 16b, annähernd eine Winkelbreite 4α. In den geradzahligen Gruppen besitzt jedes erste Paar Polarme in Drehrichtung des Schrittmotors, also in der Fig. 5 die Polarme 17a und 17b der Gruppe « 2 », eine von den Polarmen der ungeradzahligen Gruppen, also den Polarmen 16a, 16b und 16c der Gruppe « 1 » unterschiedliche Polarität. Dementsprechend sind die Querschnitte der Polarme 17a und 17b in der Fig. 5 schraffiert dargestellt. Da die Polarme der geradzahligen Gruppen paarweise mit wechselnder Polarität angeordnet sind, sind die Polarme 17a, 17b, 17e und 17f gleichnamig und mit schraffiertem Querschnitt dargestellt. Die Polarme 17c, 17d und 17g sind dagegen von entgegengesetzter Polarität und mit weissem Querschnitt dargestellt. Der Polarm, dem in der Fig. 5 ein gleichnamiger Partner fehlt, ist der Polarm 17g. Die Summe $2\alpha + \beta$ muss annähernd gleich 90°/p sein, d. h. mit p = 3 annähernd gleich 30° sein.

Innerhalb des Abschnitts der ungeradzahligen Gruppen, also im Abschnitt der Gruppe « 1 » der Fig. 5, sind die Schaltmomente $M_{S_-}$ und $M_{S_-}$ jeweils Null. Somit ist in diesem Abschnitt nur das vom dauermagnetisierten Rotor 1 erzeugte Rastmoment vorhanden. Der vom Rotor-Magneten erzeugte Fluss ist demnach nicht mit einem von der Erregerspule 8 erzeugten Fluss gekoppelt.

Innerhalb des Abschnitts der geradzahligen Gruppen, also im Abschnitt der Gruppe « 2 » der Fig. 5, ist dagegen das Rastmoment gleich Null. Der Rotor 1 stellt in diesem Abschnitt nur einen reinen magnetischen Widerstand dar, der sich in Funktion des Drehwinkels φ ändert.

In einer bevorzugten Ausführung besitzen mindestens alle Gruppen der einen Art eine gleiche Anzahl Polarme, d. h. :

$$m = m' = m'' \text{ und/oder}$$

$$n = n' = n''.$$

In einer weiteren bevorzugten Ausführung sind nur zwei Gruppen vorhanden.

In dem den Polarmen der ungeradzahligen Gruppen des Statorgehäuses 9 genenüberliegenden Bereich des Statordeckels 10 (Fig. 3) ist eine Aussparung 18 vorgesehen. Dadurch wird der vom Erregerstrom erzeugte Magnetfluss in diesen Polarmen klein gehalten.

Um Rotorpendelungen entgegenzuwirken, ist eine schraubenförmige Schlingfeder 19 (siehe Fig. 3) vorgesehen, deren eines Ende das Lager 13 und deren anderes Ende einen zylindrischen Ansatz 20 des Rotors 1 umschlingt. Die Schlingfeder 19 hemmt den Rotor 1 nicht, wenn sich dieser in Vorwärtsrichtung dreht, dämpft aber ein Zurückschwingen.

Der beschriebene Schrittmotor zeichnet sich durch einen äusserst einfachen Aufbau aus. Ausgeprägte Rotorpole sind nicht erforderlich. Die erforderliche magnetische Unsymmetrie des Schrittmotors ergibt sich nicht durch eine spezielle, nur experimentell erfassbare Formgebung der Statorpolarme, sondern durch die beschriebene Anordnung der Polarme.

Die in der Fig. 5 dargestellten Polarme 16a, 16b, 16c, 17a, 17b, 17c, 17d, 17e, 17f und 17g des Stators besitzen alle einen Querschnitt in Gestalt eines Kreisringstückes. Polarme mit einem derartigen Querschnitt benötigen zu ihrer Herstellung einen Arbeitsvorgang mehr als Polarme mit rechteckförmigen Querschnitt. Es ist daher vorteilhaft letztere zu verwenden, wobei die rechteckförmigen Querschnitte alle dann tangential zu einem gemeinsamen, mit dem Rotor 1 konzentrischen Kreis angeordnet sind. Jeder rechteckförmige Querschnitt liegt senkrecht zu demjenigen Radius des Kreises, der identisch mit seiner Mittellinie ist, ausgenommen jeweils die rechteckförmigen Querschnitte der beiden äusseren Polarme, z. B. 16a und 16c, der Gruppen « 1 », « 3 » und « 5 » mit gleichnamigen Polarmen, die jeweils senkrecht zu einem Kreisradius liegen, der ihren Querschnitt im Verhältnis eins zu zwei teilt, wobei die kleinere der so erhaltenen Teilflächen jeweils nach aussen zu einer benachbarten Gruppe weisend angeordnet ist.

## Patentansprüche

1. Einphasen-Schrittmotor mit einem dauermagnetisierten Rotor (1), der 2p Pole wechselnder Polarität besitzt, und einem eine Erregerspule (8) umgebenden Stator, dessen Polarme (14, 15) sich je nach Polarität von der einen oder von der andern Seite des Stators in axialer Richtung in den Raum zwischen der Erregerspule und dem Rotor erstrecken und in zweierlei sich abwechselnden Gruppen mit jeweils ungerader Polarmzahl angeordnet sind, wobei die eine Art Gruppen ausschliesslich gleichnamige Polarme und die andere Art Gruppen Polarme wechselnder Polarität aufweist, dadurch gekennzeichnet, dass die beiden äusseren Polarme (16a, 16c) der Gruppen (« 1 », « 3 », « 5 ») mit gleichnamigen Polarmen annähernd eine Winkelbreite 3α und die anderen Polarme (16b) dieser Gruppen (« 1 », « 3 », « 5 ») annähernd eine Winkelbreite 4α besitzen, dass der Winkelabstand zwischen benachbarten Polarmen (16a, 16b, 16c) dieser Gruppen (« 1 », « 3 », « 5 ») jeweils gleich 2β und jeder andere Winkelabstand zwischen benachbarten Polarmen des Stators gleich β ist, dass die Polarme (17a, 17b, 17c, 17d, 17e, 17f, 17g) der anderen Gruppen (« 2 », « 4 », « 6 ») jeweils annähernd eine Winkelbreite 2α besitzen und innerhalb ihrer Gruppen (« 2 », « 4 », « 6 ») paarweise mit wechselnder Polarität angeordnet sind, wobei dem letzten Polarm (17g) in Drehrichtung des Schrittmotors jeweils der gleichnamige Partner fehlt und wobei jedes erste Paar Polarme (17a, 17b) in Drehrichtung des Schrittmotors und die Polarme (16a, 16b, 16c) der Gruppen (« 1 », « 3 », « 5 ») mit gleichnamigen Polarmen unterschiedliche Polaritäten aufweisen, und dass die Summe 2α + β annähernd gleich 90°/p ist.

2. Einphasen-Schrittmotor nach Anspruch 1, dadurch gekennzeichnet, dass mindestens alle Gruppen der einen Art eine gleiche Anzahl Polarme besitzen.

3. Einphasen-Schrittmotor nach Anspruch 1 oder 2, dadurch gekennzeichnet, dass nur zwei Gruppen vorhanden sind.

4. Einphasen-Schrittmotor nach einem der Ansprüche 1 bis 3, dadurch gekennzeichnet, dass alle Polarme (16a, 16b, 16c, 17a, 17b, 17c, 17d, 17e, 17f und 17g) des Stators rechteckförmige Querschnitte besitzen, die alle tangential zu einem gemeinsamen, mit dem Rotor (1) konzentrischen Kreis so angeordnet sind, dass jeder Querschnitt senkrecht zu demjenigen Radius des Kreises liegt, der identisch mit seiner Mittellinie ist, ausgenommen die Querschnitte der beiden äusseren Polarme (16a, 16c) der Gruppen (« 1 », « 3 », « 5 ») mit gleichnamigen Polarmen, die jeweils senkrecht zu einem Kreisradius liegen, der ihren Querschnitt im Verhältnis eins zu zwei teilt, wobei die kleinere der so erhaltenen Teilflächen jeweils nach aussen zu einer benachbarten Gruppe weisend angeordnet ist.

## Claims

1. A single-phase stepping motor with a permanent magnet rotor (1) comprising 2p poles of alternate polarity, and a stator surrounding an excitation coil (8) the pole arms (14, 15) of which extending in the axial direction and, according to the polarity, from the one or the other side of the stator in the space between the excitation coil and the rotor and are arranged in alternate groups of two kinds, each with an odd number of pole arms, the one kind of groups comprising exclusively like poles arms and the other kind of groups pole arms of alternate polarity, characterized in that the two external poles arms (16a, 16c) of the groups (« 1 », « 3 », « 5 ») with like pole arms have approximately an angular width 3α and the other pole arms (16b) of these groups (« 1 », « 3 », « 5 ») approximately an angular width 4α, in that the angular distance between adjacent pole arms (16a, 16b, 16c) of these groups (« 1 », « 3 », « 5 ») is each time 2β and in that each other angular distance between adjacent pole arms of the stator is equal to β, in that the pole arms (17a, 17b, 17c, 17d, 17e, 17f, 17g) of the other groups (« 2 », « 4 », « 6 ») comprise each approximately an angular width 2α and are disposed by pairs with alternate polarity within their groups (« 2 », « 4 », « 6 »), the like partner of the last pole arm (17g) in the direction of rotation of the stepping motor being each time missing and each first pair of pole arms (17a, 17b) in the direction of rotation of the stepping motor and the pole arms (16a, 16b, 16c) of the groups (« 1 », « 3 », « 5 ») with like pole arms being of different polarities and in that the sum 2α + β is approximately equal to 90°/p.

2. A single-phase stepping motor according to claim 1, characterized in that at least all groups of the same kind have a same number of pole arms.

3. A single-phase stepping motor according to claim 1 or 2, characterized in that only two groups are present.

4. A single-phase stepping motor according to one of the claims 1 to 3, characterized in that all pole arms (16a, 16b, 16c, 17a, 17b, 17c, 17d, 17e, 17f and 17g) of the stator have a rectangular cross section and are all arranged tangentially to a common, to the rotor (1) concentrical circle such that each section is perpendicular to the radius of the circle which coincides with its middle line with the exception of the cross sections of both external pole arms (16a, 16c) of the groups (« 1 », « 3 », « 5 ») with like poles arms which are perpendicular to a radius of circle, which divide their cross section in a ratio one to two, the smallest of the surfaces so obtained being arranged directed to the outside toward a neighbouring group.

## Revendications

1. Moteur pas à pas monophasé avec un rotor (1) à aimant permanent comprenant 2p poles de polarité alternée, et un stator entourant une bobine excitatrice (8) dont les bras polaires (14, 15) s'étendent en direction axiale et selon la polarité, à partir de l'un ou de l'autre côté du stator dans l'espace entre la bobine excitatrice et le rotor et sont disposés en groupes alternés de deux espèces, chacun avec un nombre impair de bras polaires, l'une des espèces de groupes comprenant exclusivement des bras polaires de même nom et l'autre espèce de groupes des bras polaires de polarité alternée, caractérisé en ce que les deux bras polaires extérieurs (16a, 16c) des groupes (« 1 »; « 3 », « 5 ») avec des bras polaires de même nom ont approximativement une largeur angulaire 3α et les autres bras polaires (16b) de ces groupes (« 1 », « 3 », « 5 ») approximativement une largeur angulaire 4α, en ce que la distance angulaire entre des bras polaires voisins (16a, 16b, 16c) de ces groupes (« 1 », « 3 », « 5 ») est chaque fois 2β et en ce que chaque autre distance angulaire entre des bras polaires voisins du stator est égale à β, en ce que les bras polaires (17a, 17b, 17c, 17d, 17e, 17f, 17g) des autres groupes (« 2 », « 4 », « 6 ») possèdent chacun approximativement une largeur angulaire 2α et sont disposés par paires avec polarité alternée à l'intérieur de leurs groupes (« 2 », « 4 », « 6 »), le partenaire de même nom manquant chaque fois au dernier bras polaire (17g) dans la direction de rotation du moteur pas à pas et chaque première paire de bras polaires (17a, 17b) dans la direction de rotation du moteur pas à pas et les bras polaires (16a, 16b, 16c) des groupes (« 1 », « 3 », « 5 ») avec des bras polaires de même nom étant de polarités différentes, et en ce que la somme 2 + est approximativement égale à 90°/p.

2. Moteur pas à pas monophasé selon la revendication 1, caractérisé en ce qu'au moins tous les groupes de même espèce ont un même nombre de bras polaires.

3. Moteur pas à pas monophasé selon la revendication 1 ou 2, caractérisé en ce que deux groupes seulement sont présents.

4. Moteur pas à pas monophasé selon l'une des revendications 1 à 3, caractérisé en ce que tous les bras polaires (16a, 16b, 16c, 17a, 17b, 17c, 17d, 17e, 17f et 17g) du stator ont une section rectangulaire et sont tous arrangés tangentiellement à un cercle commun concentrique au rotor (1) de manière que chaque section est perpendiculaire au rayon du cercle qui coïncide avec sa ligne médiane, à l'exception des sections des deux bras polaires extérieurs (16a, 16c) des groupes (« 1 », « 3 », « 5 ») avec des poles de même nom qui sont perpendiculaires à un rayon de cercle, qui partage leur section dans un rapport de un à deux, la plus petite des surfaces ainsi obtenue étant disposée dirigée à l'extérieur vers un groupe voisin.

Fig. 1A  Fig. 1B  Fig. 1C  Fig. 1D  Fig. 1E

$U_E=0$  $U_E<0$  $U_E=0$  $U_E>0$  $U_E=0$

Fig. 1F

Fig. 2

Fig. 3

Fig. 4

"1"

$2m+1$

$2n+1$

"2"

$2m'+1$

"3"

$2n'+1$

"4"

$2n''+1$

"6"

1

"5"

$2m''+1$

Fig. 5

$\beta$

$3\alpha$

$2\beta$

$\beta$

$2\alpha$

16a

17g

$4\alpha$

$2\alpha$

17f

N

S

"1"

$\beta$

S

S

16b

$2\alpha$

16c

$2\beta$

$\varphi$

17e

$p=3$

$2\alpha$

"2"

N

N

$3\alpha$

$2\alpha$

17d

S

17a

$\beta$

17c

17b

$2\alpha$

$\beta$

$\beta$

$2\alpha$

$2\alpha$

$\beta$

$\beta$

$90\%/p = 30°$